# EUROPEAN PATENT APPLICATION

(11) **EP 2 375 853 A1**
(43) Date of publication of application: **12.10.2011**
(21) Application number: 09837250.1
(22) Date of filing: 06.01.2009
(51) Int. Cl.: H04W 88/04

(54) **A BASE STATION, RELAY STATION, MOBILE TERMINAL FOR RELAYING AND THE METHOD THEREOF**

(71) Applicant: Alcatel Lucent, 75008 Paris (FR)
(72) Inventor: LENG, Xiaobing, Shanghai 201206 (CN); SHEN, Gang, Shanghai 201206 (CN); JIN, Shan, Shanghai 201206 (CN); ZHANG, Kaibin, Shanghai 201206 (CN)
(74) Representative: Dreiss
(86) International application number: PCT/CN2009/000020
(87) International publication number: WO 2010/078692

(57) **Abstract**

In order to solve the drawbacks in the prior art, a new technology scheme is provided in the present invention, in which relay stations are introduced to participate in the communication of multiple carriers. The relay station only relays the carriers with bad wireless transmission characteristic and controls the transmission of those relayed carrier via a carrier which does not need to be relayed. The relayed carrier is generally a high frequency carrier and the carrier which does not need to be relayed is a low frequency carrier. The base station or the relay station determines a carrier which needs to be relayed for the relay station according to the channel conditions of each carrier. The technology scheme provided by the present invention divides a NLOS (Non-Line-Of-Sight) transmission into at least two LOS transmissions. Therefore, it is easy to extend high frequency carrier to cell edge etc. Meanwhile the mobile terminal does not need extra transmission power to transmit high frequency carrier, so that the fast consumption of the terminal battery power is avoided and the great radiation hazard to the human body is also avoided. The service data and the signaling etc. which has not been relayed will still propagate in the low frequency carrier, so that the time delay resulted from the relay is avoided.

## Description

### Field of the invention

The present invention relates to a wireless communication network, more particularly, to a wireless relay network based on multiple carriers.

### Background of the invention

Next wireless communication network will need a wider bandwidth to support high transmission rate. But the low frequency resources, in which channels have good performance, for example, the frequency band less than 1GHz are shortage, which results in the difficulty to obtain enough contiguous frequency band.

In order to obtain additional frequency resource, operators begin to consider to use higher frequency band, such as 2.1, 2.3, 2.5 and 3.5GHz, which the traditional second mobile communication network (3G) does not use. One of the important reasons is the obvious difference between these carriers and the traditional carriers below 1GHz.

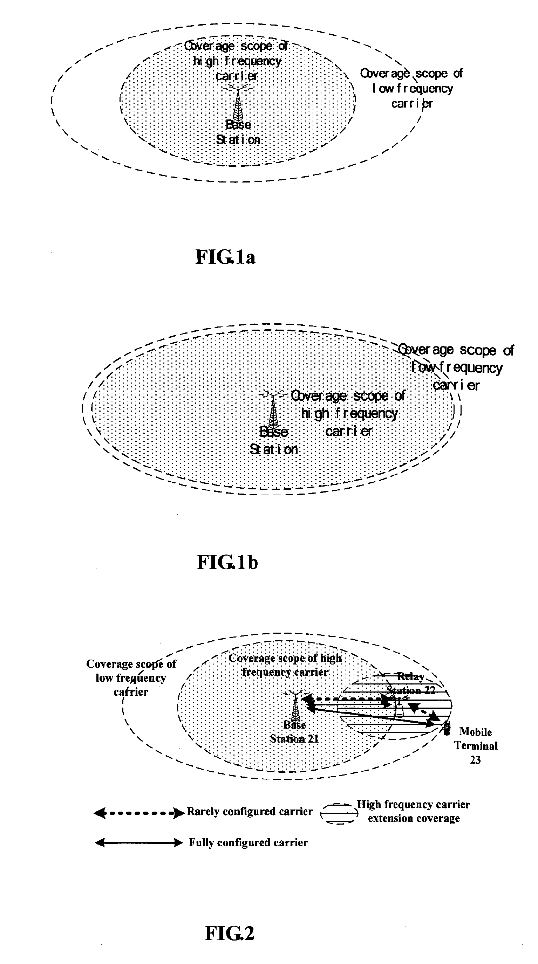

FIG.1a shows a schematic diagram of a wireless communication network based on multiple carriers. Wherein, the signal coverage scope of 2GHz carrier is much shorter than the effective transmission distance of 1GHz carrier. In other words, the attenuation of 2GHz carrier is much greater than that of 1GHz carrier after the 2GHz and 1GHz carriers, which are transmitted with the same power, propagate same distance.

Since there is such a natural shortage in the propagation characteristic of high frequency carriers, a mobile terminal located in the cell edge or adjacent to the cell edge nearly cannot use high frequency carriers to communicate with a base station. And because of the limited low frequency carriers, these mobile terminals usually cannot perform high rate communication, which affects user experience.

### Summary of the invention

In order to solve the drawbacks described above in the prior art, the present invention provides a new technology scheme, in which relay stations are introduced to participate in the communication of multiple carriers and base stations or relay stations determine the carriers needed to be relayed for relay stations according to the channel conditions of each of the carriers.

According to a concrete embodiment of the present invention, a method, in a wireless communication network based on multiple carriers, for implementing relay, is provided, comprising steps of: a. according to channel conditions of said multiple carriers, determining at least one carrier which needs to be relayed for at least one relay station dominated by a base station respectively; b. said at least one relay station performs relay based on said determined at least one carrier which needs to be relayed respectively.

According to a concrete embodiment of the present invention, a base station in a wireless communication network based on multiple carriers is provided, comprising: a first determining means, for determining at least one carrier which needs to be relayed for at least one relay station dominated by said base station respectively according to channel conditions of said multiple carriers.

According to another concrete embodiment of the present invention, a relay station in a wireless communication network based on multiple carriers is provided, comprising: a third determining means, for determining at least one carrier which needs to be relayed by said relay station according to channel conditions of said multiple carriers.

According to another concrete embodiment of the present invention, a mobile terminal in a wireless communication network based on multiple carriers is provided, comprising: a second sending means, for by using at least one carrier which doesn't need to be relayed by a relay station to which the mobile terminal belongs, sending resource assignment information of said at least carrier which needs to be relayed by said relay station to a base station:

The technology solution provided by the present invention divides a NLOS (Non-Line-Of-Sight) transmission into at least two LOS transmission. Therefore, it is easy to extend high frequency carrier to cell edge etc. Meanwhile the mobile terminal does not need extra transmission power to transmit high frequency carrier, so that the fast consumption of the terminal battery power is avoided and the great radiation hazard to the human body is also avoided. The service data and the signaling etc. which have not been relayed will still propagate in the low frequency carrier, so that the time delay resulted from the relay is avoided.

### Brief description of drawings

With reference to the following description to the non-limited embodiments of the figures, other features, aims and advantages will be more apparent.
FIG.1a shows a schematic diagram of a wireless communication network based on multiple carriers;
FIG.1b shows a scheme diagram of increasing the effective transmission distance of high frequency carrier;
FIG.2 shows a diagram of a wireless communication network according to a concrete embodiment of the present invention;
FIG.3a shows a flowchart of a method for implementing relay in a wireless communication network based on multiple carriers according to a concrete embodiment of the present invention;
FIG.3b shows a concrete flow of step S31 shown in FIG 3a according to a concrete embodiment of the present invention;
FIG.4 shows a schematic diagram of a frame structure according to a concrete embodiment of the present invention;
FIG.5 shows a frame structure in detail according to a concrete embodiment of the present invention based on FIG 4;
FIG.6 further shows the relationship between carriers according to a concrete embodiment of the present invention;
FIG.7 shows the information for synchronization in a frame structure according to a concrete embodiment of the present invention in detail;
FIG.8 shows a detailed flow according to a concrete embodiment of the present invention;
FIG.9 shows a structure block diagram of a base station in a wireless communication network based on multiple carriers according to a concrete embodiment of the present invention;
FIG.10 shows a structure block diagram of a relay station in a wireless communication network based on multiple carriers according to a concrete embodiment of the present invention;
FIG.11 shows a structure block diagram of a mobile terminal in a wireless communication network based on multiple carriers according to a concrete embodiment of the present invention;

Wherein, same or similar reference numerals refer to same or similar or step features or means (modules) features.

### Detailed description of embodiments

For the convenience of understanding and the clarity to explain the protection scope of the claims of the application, the important concepts appearing in the application are illustrated as follows:

Carrier: In a wireless communication network, symbols to be transmitted, for example, symbols after constellation modulation, are usually used to modulate carriers, so that signals to be transmitted are obtained and transmitted via an antenna. In the application, the frequency scope of a carrier may be one frequency point or a narrow frequency band, similar to secondary carrier which is often mentioned. Preferably, the frequency scope of a carrier may be a wider frequency band, even the frequency band which is often mentioned, for example, 1GHz and below, 2.1GHz-2.5GHz, 2G-3GHz.

Since the high frequency propagation characteristic has the disadvantage mentioned above when compared to the low frequency propagation characteristic, a solution is shown in FIG.1b, in which, the transmission power when the base station and mobile terminal transmit the high frequency carrier is increased, so that the effective transmission distance of the high frequency carrier can approach that of the low frequency carrier. But the scheme may be limited by:

NLOS condition: The attenuation of the high frequency electromagnetic wave under the condition of NLOS is very serious, therefore even the transmission power is increased, the effective transmission distance of the high frequency carrier cannot reach the expectation.

Battery power of the mobile terminal: Because the mobile terminal always sets a rechargeable battery as the power supply, great increase in the transmission power of a portion of signals will affect the duration of the battery, which causes the mobile terminal to be charged frequently and the usage to become inconvenience.

Human body health: as known to all, the radiation of the mobile terminal is hazardous for the human body. And the radiation amount is always directly proportional to the transmission power of the signal, therefore this scheme will result in greater health problems.

In the already defined 802.16j or being discussed 802.16m , the relay scheme is only suitable for a single carrier and is not related to the situation of the multiple carriers. One aim of the present invention is to implement relay in the situation of the multiple carriers.

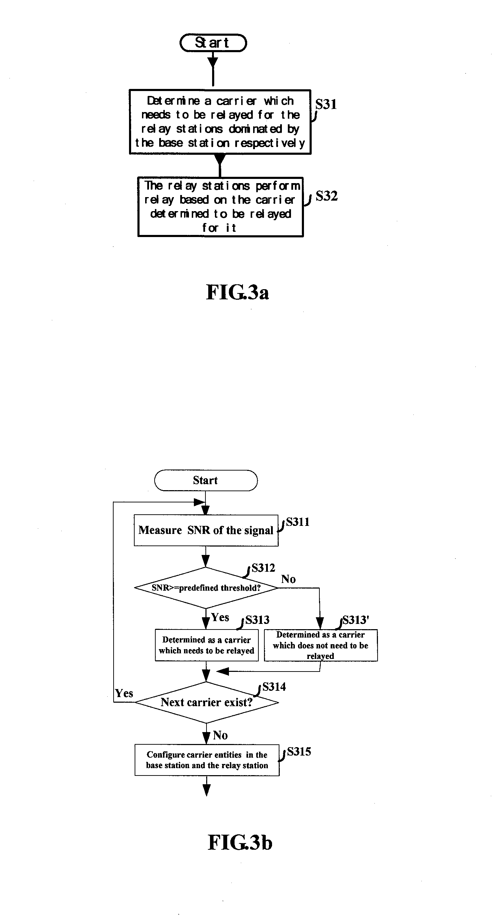

With reference to the exemplary wireless network in FIG.2 and in conjunction with the flowchart in FIG.3a, 3b, the respective non-limited embodiments of the present invention are illustrated as follows. Wherein, the wireless network is based on the following three carriers, 1GHz and below, 2.1GHz-2.5GHz, 3GHz and above.

According to a concrete embodiment of the present invention, a method, in a wireless communication network based on multiple carriers, for implementing relay is provided. The flow of the method is shown in FIG.3a, comprising: S31: according to channel conditions of said multiple carriers, determining at least one carrier which needs to be relayed for at least one relay station dominated by a base station respectively; S32: said at least one relay station performs relay based on said determined at least one carrier which needs to be relayed respectively. Since multiple relay stations may be dominated by a base station and some of these multiple relay stations may be set to the positions adjacent to the base station only in order to increase the throughput but may be helpless to the extending the coverage scope of the high frequency carrier. According to an embodiment of the present invention, step S31, S32 may be performed only for the relay stations far from the base station, as relay station 22 shown in FIG.2.

According to a concrete embodiment of the present invention, the flow of step S31 is shown in FIG.3b. Wherein, without the loss of generality, the flow is executed for each of the carriers one after another. It is understandable that this kind of execution will not limit the protection scope of the present invention. When the means/modules/circuits for processing the information in the base station or relay station have synchronization process ability, the flow may be executed for multiple carriers in the meantime.

Base station 21 uses each of the carriers in the cell to broadcast preamble signals respectively, wherein, the preamble signal is one of the classical signals for the channel estimation in IEEE 802.16 series standard. After the relay station (RS) 22 receives the signal in substep S311, the relay station measures the signal quality information of the signal, which includes, but not limited to, received signal strength indicator (RSSI), signal to noise ratio (SNR), signal to interference plus noise ratio (SNIR) and etc. Of course, each measured signal quality information corresponds to one carrier. In the example, without the loss of generality, SNR is set as an example. It is understandable, in the practical application, the signal for performing signal quality measurement is not limited to the preamble signal. More particularly, the signal quality of the uplink or downlink service data may be measured and step S31 is based on the measurement result.

Then, the method continues to substep S312. Wherein, according to the obtained SNR, those mentioned above is determined if they fulfill the predetermined condition. The determining process may be executed in relay station 22, without any limitation, this predetermined condition is determining if SNR value is above or equal to the SNR threshold. Preferably, the SNR threshold is preferably properly set in advance, so that the carrier, of which SNR value is above or equal to the SNR threshold, may use this carrier between base station 21 and the mobile terminal dominated by relay station 22 (for example, mobile terminal 23 in FIG.2) without being relayed to perform communication and can obtain a acceptable performance. Alternatively, the SNR threshold of the same carrier may be different due to the difference of the relay station. Additionally, for the different carriers, the SNR threshold set for the same relay station may also be different.

It is understandable, the threshold may be determined in the set-up phase of the relay station by the operators according to wireless environment conditions, use situation of the carrier of the adjacent base station, field channel measurement and the service amount estimation of the dominated area. And the threshold may be set through the configuration management interface of the relay station or base station.

Alternatively, relay station 22 may report the measurement results to base station 21 after it measures the SNR values in each of the carriers. Then substep S312 is executed by base station 21.

In the example, the determining result of substep S312 is set to: SNR value of the 1GHz and below carrier is above or equal to the corresponding threshold.

Next, 1GHz and below carrier needs to be classified according to the determining result mentioned above. Wherein, in the respective embodiments, in which substep S312 is executed by base station 21, this classification operation is executed by base station 21. However, in the embodiments, in which substep S312 is executed by relay station 22, this classification operation may not only be executed by base station 21 but also be executed by relay station 22. In the following the former is set as an example to be illustrated.

Since SNR value of 1GHz and below carrier is above or equal to the corresponding threshold, the method continues to substep S313. Base station 21 determines it as the carrier which does not need to be relayed by relay station 22.

Next, the method continues to substep S314. Since 2.1GHz-2.5GHz carrier, 3GHz and above carrier have not been classified, the method will repeat the steps mentioned above for these two carriers respectively. In the example, 2.1GHz-2.5GHz carrier, 3GHz and above carrier are determined as the carriers which need to be relayed by relay station 22 because of the bad channel condition, 1GHz and below carrier is determined as the carrier which does not need to be relayed.

After one carrier is determined as a carrier which needs to be relayed, the related entities in base station 21, relay station 22 will be configured as being into relay mode.

Then, relay station 22 executes relay work on the two carriers under the control of base station 21.

In the concrete embodiments mentioned above, the signal quality of the downlink channel between base station 21 and relay station 22 is used to determine a carrier which needs to be relayed and a carrier which does not need to be relayed. This approach is especially suitable for the network environment with the high symmetry of the uplink channel and downlink channel. In the network environment with the low symmetry of the uplink channel and downlink, base station 21 may use the uplink signal from relay station 22 to measure the signal quality of each of the carriers on the uplink, so that a carrier which needs to be relayed and the carrier which does not need to be relayed are selected more accurately for relay station 22. Wherein, said uplink signal is, for example, signaling sent in the uplink relay zone by relay station 22 or the signal for carrying the service data.

It is understandable, that the execution of step S31 mentioned above is not limited to the time when the relay station accesses the network or then time when the operation begins. When the relay station is performing relay work, it may measure the channel conditions of multiple carriers periodically and report the measurement result to the base station. When the base station detects that the channel condition of the carrier that communicated directly by the base station and the mobile terminal before becomes worse, this carrier may be determined as a carrier which needs to be relayed by the relay station. On the contrary, when the base station detects that the channel condition of the carrier that needs to be relayed by the relay station before becomes better, this carrier may be determined as the carrier which does not need to be relayed by the relay station.

Similarly, when relay station 22 is performing relay work, base station 21 may not only obtain the signal quality information of each of the carriers on the link between base station 21 and relay station 22, but also may obtain the signal quality information of the carrier on the link between relay station 21 and the mobile terminal dominated by relay station 21. Through the comparison between the total attenuation amount produced from the base station via the relay station to the mobile terminal and the attenuation amount from the base station directly to the mobile terminal, according to the consideration of the transmission delay caused by the relay, a carrier which needs to be relayed and the carrier which does not need to be relayed are selected most properly.

As mentioned above, the carrier mentioned in the application is a relative general concept. According to a variation of the embodiment mentioned above, 2.1GHz to 2.5GHz frequency resource is allowed to be used in the wireless network. In this regard, 2.1GHz-2.2GHz may be considered as a carrier, 2.2GHz-2.4GHz is another carrier, and 2.4GHz-2.5GHz is the third carrier. From these three carriers, the base station determines a carrier which needs to be relayed and the carrier which does not need to be relayed for the relay station. In some channel conditions, though 2.1GHz-2.2GHz carrier is near to 2.2GHz-2.4GHz carrier in the frequency domain, they have very different channel conditions. In this case, it is necessary to select a carrier which needs to be relayed and the carrier which does not need to be relayed based on the basic concept of the present invention.

It is understandable that since the relay station suitable for step S31 may be more than one and there is greater or less difference of the wireless channels between these relay stations and base station 21. Therefore, in the meantime when one carrier is determined as a carrier which needs to be relayed by a certain relay station, the same carrier may be determined as the carrier which does not need to be relayed by another relay station.

According to a variation of the embodiment mentioned above, a portion of the carriers may be statically configured as a carrier which needs to be relayed and the carrier which does not need to be relayed. For example, the carrier with the worst time-varying or the best channel stability is statically configured as a certain carrier of a certain relay station. For example, 1GHz and below carrier may be configured as the carrier which does not need to be relayed by relay station 22.

The concrete embodiments of the present invention will be introduced in detail in the following.

In the current version of 802.16m SDD (System Description Document), carriers of a multi-carrier system may be configured as fully configured carriers and partially configured carriers. Wherein, the fully configured carrier is a carrier by which all the control information related to the carrier including synchronization information, broadcast/multicast/unicast control signaling is transmitted. And the partially configured carrier is such a carrier that only a portion of the control information related to the carrier is transmitted by the carrier, the remaining portion is carried by the fully configured carrier.

Each mobile terminal has a primary carrier for transmitting the service data and the control information of physical layer and MAC layer. Optionally, the mobile terminal may also have at least one secondary carrier for mainly transmitting the service data. Wherein, the primary carrier is the fully configured carrier and the secondary carrier may be the fully configured carrier and the partially configured carrier as well.

According to a concrete embodiment of the present invention, in order to improve the system response time by the greatest extent, the control signaling should be transmitted by the carrier which does not need to be relayed as more as possible. Moreover, the base station is set to communicate signaling with the mobile terminal directly, through which, the control mechanism is centralized in the base station. Therefore, the complication of the relay station is well controlled, which results in the reduction of the cost of the relay station.

In this concrete embodiment, the rarely configured carrier is defined as the carrier which usually appears in the link between the base station and the relay station and the link between the relay station and the mobile terminal. Without loss of generality, the control signaling carried by the rarely configured carrier only includes synchronization information. Compared to the rarely configured carrier, the partially configured carrier not only carries the control signaling but also needs to carry several uplink control information and downlink control information including the resource assignment information, for example, the resource request information and the resource assignment information (DL-MAP/UL-MAP).

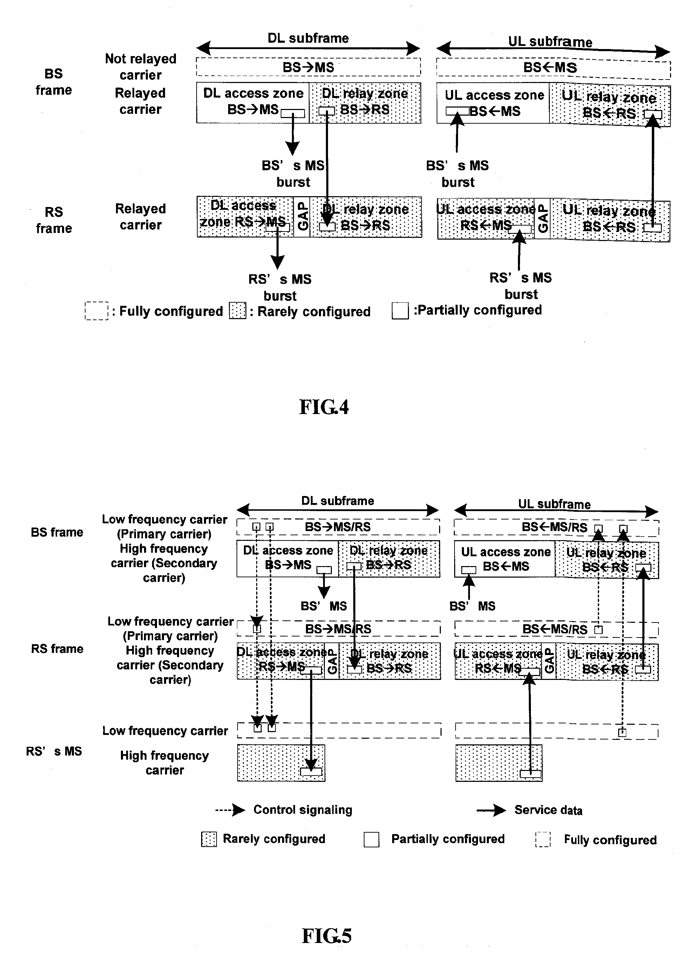

FIG.4 shows a schematic diagram of a frame structure according to a concrete embodiment of the present invention. Wherein, crosswise direction corresponds to the time domain and lengthwise direction corresponds to the frequency domain. As shown in the figure, in the time domain, a same carrier may be reused in the relay zone (corresponding to the link between the base station and the relay station) and in the access zone (corresponding to the link between the base station and the mobile terminal and the link between the relay station and the mobile station). From the perspective of the space domain, a carrier may be reused between the coverage area of the relay station and the coverage area of the base station. As also shown in the figure, in the downlink access zone of the base station, a carrier which needs to be relayed is partially configured. And in the downlink relay zone of the base station and in the downlink access zone of the relay station, the same carrier becomes the rarely configured carrier. The situation of the uplink is similar. In the relay station, a carrier which needs to be relayed shown in the figure is rarely configured in the uplink and downlink subframe.

According to a preferred embodiment of the invention, most control signalings sent to the mobile station dominated by the relay station and the control signaling sent by the mobile station are all carried by the carrier which does not need to be relayed. Without the loss of generality, said carrier which does not need to be relayed is the low frequency carrier, for example, 1GHz and below carrier as mentioned above. And a carrier which needs to be relayed, for example, 2.1GHz-2.5GHz carrier, 3GHz and above carrier, is mainly used for transmitting the service data and the absolutely necessary control information, for example, synchronization information. It is understandable, with the continuous development of the technology in the field, when the synchronization between the network devices is not based on transmitting the synchronization information, a carrier which needs to be relayed may only transmit the service data and not carry any control information.

According to the preferred embodiment, most of the service data of the mobile terminal will all carried by the high frequency carrier and the rare low frequency carrier will be mainly used for transmitting the control signaling without relay. Therefore, the control signaling such as resource assignment request, resource assignment response may need not to be relayed, so that it may reach the destination in the shortest time. The base station may receive the resource assignment request sent by the mobile station as soon as possible and response it immediately. And the mobile station can also know the resource which is assigned for it by the base station at the first moment for transmitting the service data.

Moreover, considering that the service data of certain service is sensitive to the time delay, for example, voice service, video phone service and etc. Therefore, according to a preferred embodiment, the service data of the time delay sensitive service will also be transmitted by the carrier which does not need to be relayed as far as possible. The resource assignment of a certain service related to a concrete mobile terminal may be implemented by those skilled in the art based on the available resource assignment scheme or the mature scheme that will appear in the future.

FIG.5 shows a frame structure in detail according to a concrete embodiment of the present invention based on FIG.4.

Wherein, the base station uses the high frequency carrier to communicate with the mobile station which is directly dominated by the base station. At this moment, the high frequency carrier is the partially configured carrier mentioned above and it is used as the secondary carrier.

In the access zone of the relay station, the relay station uses the high frequency carrier mentioned above to communicate with the mobile station dominated by the relay station. The high frequency carrier is the rarely configured carrier mentioned above.

In the relay zone, the high frequency carrier is used between the base station and the relay station to perform communication, i.e. backhauling communication.

Since the relay station reuses the high frequency carrier in the access zone and the relay zone which is continuous in its time domain, and the physical layer entity of this high frequency carrier will switch from the access zone to the relay zone, i.e. from the send mode in the downlink to the receive mode in the downlink, and from the receive mode in the uplink to the send mode in the uplink. The switch need certain time, therefore, preferably as shown in FIG.5, a window referred as GAP is included in the uplink and downlink subframe of the relay station respectively to divide the access zone and the relay zone in order to ensure the various elements in the relay station to switch from the send mode to the receive mode reliably, or from the receive mode to the send mode, avoiding the data loss which happens during the mode switch which is performed by the physical entity of the relay station.

According to a concrete embodiment of the present invention, the information of a carrier which needs to be relayed by the relay station and transmitted on a carrier which does not need to be relayed by the relay station includes resource assignment information. More particularly, after the resource schedule performed by the base station, the base station will report the assignment result of the resource block on the high frequency carrier to the relay station and the mobile terminal dominated by the relay station via the low frequency carrier.

It is understandable, that the information of a carrier which needs to be relayed by the relay station and transmitted via a carrier which does not need to be relayed by the relay station by the base station is not limited to resource assignment information, for example:

### Uplink

Channel quality information between the base station and the relay station, between the relay station and the mobile terminal, between the base station and the mobile terminal;
HARQ information between the base station and the relay station, between the relay station and the mobile terminal;
MIMO feedback information between the base station and the relay station, between the relay station and the mobile terminal;
Resource assignment request of the mobile terminal.

### Downlink

System configuration signaling, for example, bandwidth of all carriers in the downlink and uplink, TDD downlink/uplink ratio, antenna configuration, pilot configuration, ranging related configuration, etc;
Control signaling for notification, e.g. paging;
Control signaling for the service data, e.g. resource assignment result (response), power control and downlink acknowledgement signaling related to the service data sending and reception.

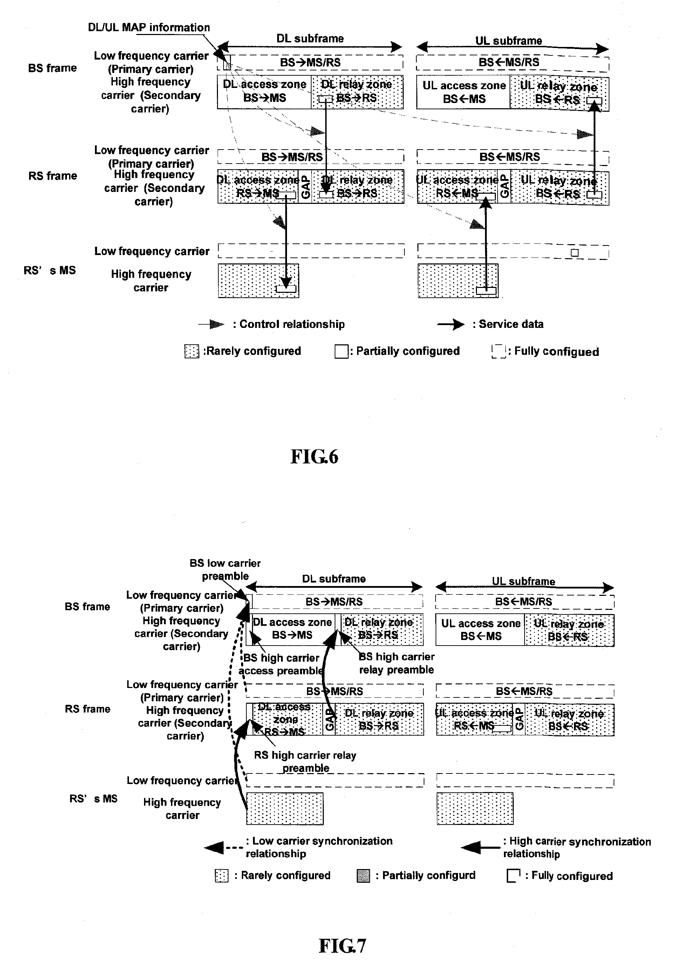

FIG.6 further shows the relationship between carriers. Wherein, since the control signaling of the high frequency carrier is mostly carried by the low frequency carrier, as also referred to out-of-carrier control. Similar to IEEE802.16e standard, DL/UL-MAP information shown in the figure indicates the size and the location of the time frequency resource blocks occupied by each downlink/uplink transmission. Additionally, the relationship between MAP information transmitted on a carrier which does not need to be relayed and the information transmitted on a carrier which needs to be relayed is shown in the figure by smoothly curved dotted lines. Wherein, the implementation of the latter is dependent on the information obtained by the former.

Compared with the current 802.16e and 802.16j, the frame structure shown in FIG.6 defines a new carrier, link and the relationship between the relay station and the control signaling. For those signaling aiming at the channel level, carrier ID, link ID or relay station ID need to be added, so that the relay station, mobile terminal know which carrier, which link, which relay station the control signaling aims at. For example, the signaling is downlink channel descriptor (DCD), which is mainly used for the parameters of the downlink physical channel defined in 802.16e. According to a concrete embodiment of the present invention, the signaling has the following form:

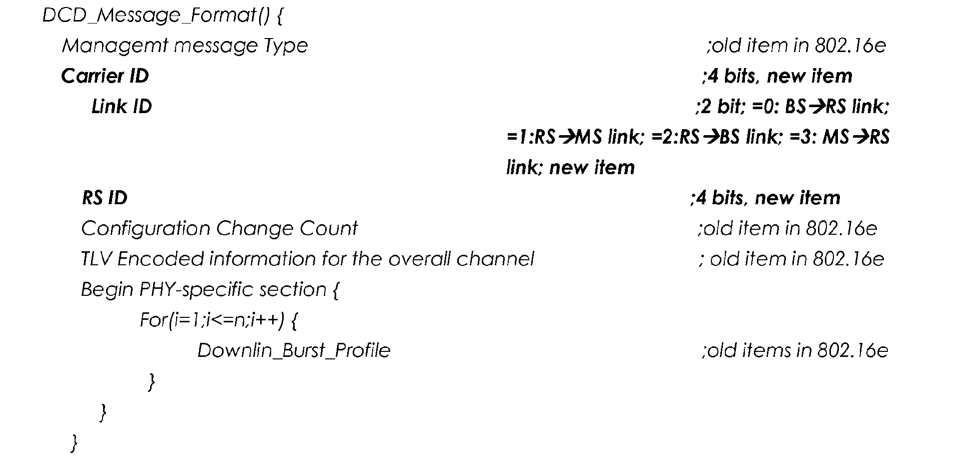

For those signaling aiming at a connection, such as DL, UL-MAP, connection ID (CID) is defined at MAC layer and each CID is exclusive inside a cell. When the connection is established, the base station will assign a carrier for the connection and inform the corresponding mobile terminal and the relay station. Therefore, this kind of the signaling will not contain carrier ID, link ID or relay station ID. The base station, the relay station and the mobile terminal only need to keep a mapping table between the connection CID and carrier ID/link ID/relay station ID, as shown in Table 1.

**Table 1 A mapping table between the connection CID and carrier ID/link ID/relay station ID**

| CID | Carrier ID | Link | RS ID | Notes |
|---|---|---|---|---|
| (16bit) | (4bit) | ID(2bit) | (4bit) | |
| 1234 | 2 | 0 | 0x3 | Connection 1234 is assign carrier 2 over BS→RS link of RS 3 |
| 2345 | 3 | 3 | 0x5 | Connection 2345 is assign carrier 1 over MS→RS link of RS 5 |
| ... | ... | ... | ... | |

Based on this, once the mobile terminal or the relay station receives DL/UL-MAP information, based on CID and the pre-stored mapping information, they can extract their own control information from DL/UL-MAP information.

According to 802.16m requirement, synchronization channel needs to provide a reference signal for time, frequency and frame synchronization, RSSI estimation, channel estimation and base station identification. In order to meet the above requirement, the low frequency carrier and the high frequency carrier need to have separated synchronization channel as shown in FIG.7.

Wherein, the low frequency physical entity of the relay station will utilize preamble signals sent on the low frequency carrier by the base station to synchronize with the base station in order to perform the signaling transmission. In the relay zone, the high frequency physical entity of the relay station will utilize preamble signals sent on the high frequency carrier by the base station to synchronize with the base station in order to perform the backhaul of the service data. Moreover, the relay station also sends preamble signals in each frame head via the high frequency carrier and they are separated from preamble signals sent on the same carrier by the base station through FDM/CDM.

The mobile terminal performs synchronization with the base station on the low frequency carrier directly to perform the direct transmission of the signaling. And the mobile terminal performs synchronization with the relay station on the high frequency carrier to perform the transmission of the data service. The separated synchronization can guarantee precise timing and channel estimation for each physical entity.

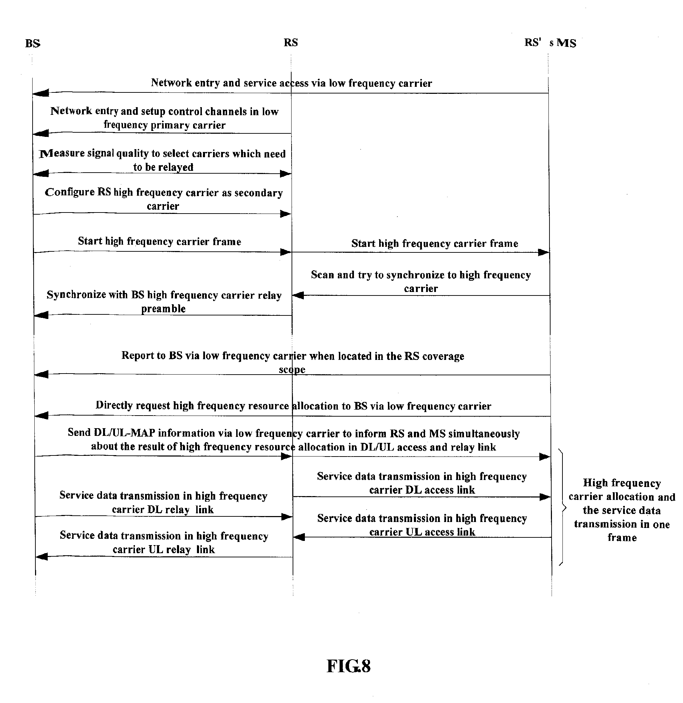

Based on the detail description for each concrete embodiment of the present invention above, a complete flow is used to summarize the present invention. FIG.8 shows a detailed flow according to a concrete embodiment of the present invention.

After a relay station powers on and enters the network, it will try to synchronize with the base station and select a carrier with the best channel condition as its primary carrier. Without the loss of generality, the primary carrier is the low frequency carrier. Via this carrier, the base station may configure and control the relay station, including the initialization for all the other carriers.

Next, the relay station measures the channel quality of other carriers to determine which carriers need to be relayed and which carriers do not need to be relayed.

Once a carrier is determined as a carrier which needs to be relayed by the relay station, the base station will configure the carrier as the partially configured carrier in the access zone of the base station and configure it as the rarely configured carrier in the relay zone. At the same time, the base station will configure the carrier as the rarely configured carrier in the access zone of the relay station.

Then, the base station and the relay station will start the frames of their high frequency carrier. As shown in FIG.8, the frames of the high frequency carrier of the base station and the relay station start from preamble sent for the synchronization of the mobile terminal. According to a concrete embodiment of the present invention, the preambles sent by the base station and the relay station are different random sequence.

A mobile terminal based on multi-carrier will receive and measure the signal power of these two preambles and report the measurement result to the base station via the low frequency carrier. The reported signaling includes the information about carrier ID/link ID/relay station ID, as mentioned above in the introduction to the new DCD. Based on this report, the base station can judge the mobile terminal is located in the coverage scope of the relay station or in the coverage scope of the base station. In other words, the base station can judge that the mobile terminal should be dominated by the relay station or dominated directly by itself.

If the mobile station needs to be dominated directly by the relay station, the base station will assign the high frequency resource for the relay station to dominate the mobile terminal. The high frequency resource belongs to a carrier determined as a carrier which needs to be relayed as mentioned above. In the example, the assignment of the high frequency resource above is accomplished on the low frequency carrier mentioned above.

The method aspect of the present invention has been described in detail above. In the following, the apparatus aspect of the present invention will be introduced briefly. It is understandable to those skilled in the art that any apparatus mentioned in the application may be implemented only with hardware mode, only with software mode or hardware and software combined mode, and they are all located in the protection scope of the claims with the application without exception.

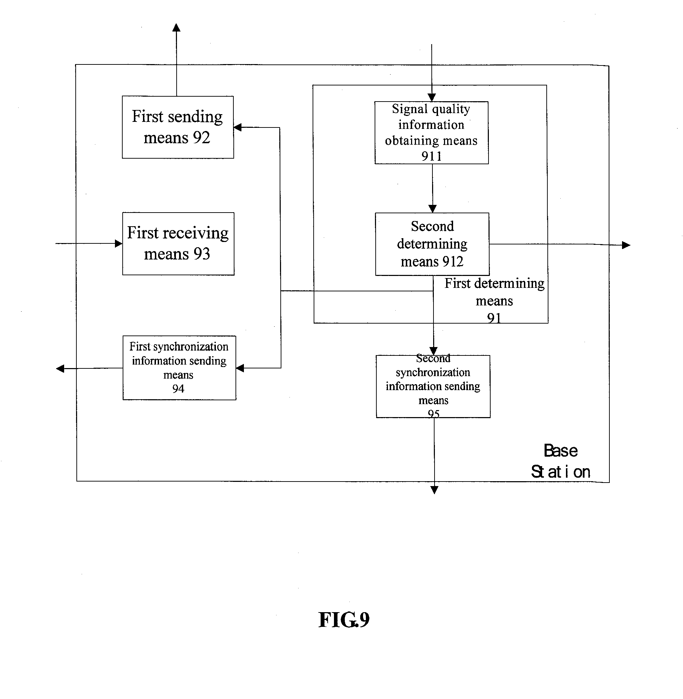

FIG.9 shows a structure block diagram of a base station in a wireless communication network based on multiple carriers; the base station is base station 21 as shown in FIG.2. Wherein, it includes: a first determining means 91, for determining at least one carrier which needs to be relayed for at least one relay station dominated by said base station respectively according to channel conditions of said multiple carriers.

Said first determining means 91 comprises: a signal quality information obtaining means 911, for obtaining signal quality information of each of said multiple carriers; and a second determining means 912, for determining at least one carrier which needs to be relayed for each said relay station according to the obtained signal quality information.

Preferably, the base station 21 further includes: a first sending means 92, for executing the following process for each of said at least one relay station: by using at least one carrier which does not need to be relayed by said relay station, sending a resource assignment response of said at least one carrier which needs to be relayed by said relay station to said relay station and at least one mobile terminal dominated by said relay station.

Preferably, the base station 21 further includes: a first receiving means 93, for executing the following process for each of said at least one relay station: by using at least one carrier which does not need to be relayed by said relay station, receiving, from at least one mobile terminal dominated by said relay station, a resource assignment request of said at least one carrier which needs to be relayed by said relay station.

Preferably, the base station 21 further includes: a first synchronization information sending means 94, for executing the following process for each of said at least one relay station: sending first synchronization information to said relay station by using said at least one carrier which needs to be relayed by said relay station, said first synchronization information is used for the relay station to synchronize with the base station on said at least one carrier which needs to be relayed by said relay station.

Preferably, the base station 21 further includes: a second synchronization information sending means 95, for executing the following process for each of said at least one relay station: sending second synchronization information to said relay station and at least one mobile terminal dominated by said relay station by using at least one carrier which doesn't need to be relayed by said relay station, said second synchronization information is used for the relay station and at least one mobile terminal dominated by said relay station to synchronize with the base station on said at least one carrier which doesn't need to be relayed by said relay station.

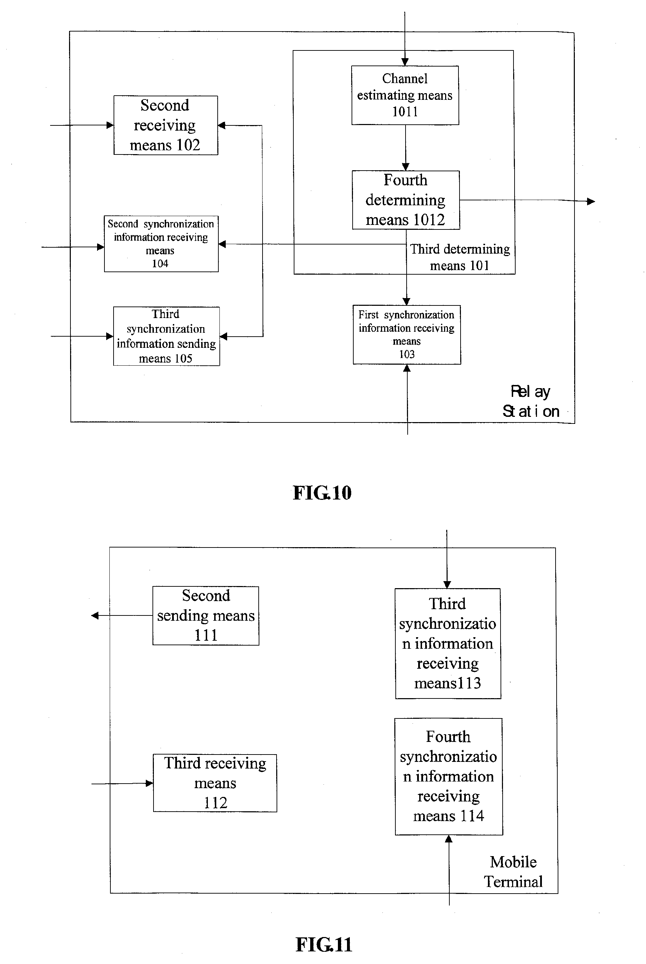

FIG. 10 shows a structure block diagram of a relay station in a wireless communication network based on multiple carriers, as relay station 22 shown in FIG.2. Wherein, it includes: a third determining means 101, for determining at least one carrier which needs to be relayed by said relay station according to channel conditions of said multiple carriers.

Wherein, the third determining means 101 comprises: a channel estimating means 1011, for performing channel estimation for said multiple carriers, so as to obtain signal quality information of said multiple carriers; and a fourth determining means 1012, for determining said at least one carrier which needs to be relayed by said relay station, according to the obtained signal quality information.

Preferably, relay station 22 further includes: a second receiving means 102, for receiving, from the base station by using at least one carrier which doesn't need to be relayed by said relay station, resource assignment response of said at least one carrier which needs to be relayed by said relay station.

Preferably, relay station 22 further includes: a first synchronization information receiving means 103, for receiving first synchronization information from said base station by using said at least one carrier which needs to be relayed by said relay station, said first synchronization information is used for the relay station to synchronize with the base station on said at least one carrier which needs to be relayed by said relay station.

Preferably, relay station 22 further includes: a second synchronization information receiving means 104, for receiving second synchronization information from said base station by using the at least one carrier which doesn't need to be relayed by said relay station, said second synchronization information is used for the relay station to synchronize with the base station on said at least one carrier which doesn't need to be relayed by said relay station.

Preferably, relay station 22 further includes: a third synchronization information sending means 105, for sending third synchronization information to at least one mobile terminal dominated by said relay station by using said at least one carrier which needs to be relayed by said relay station, said third synchronization information is used for said at least one mobile terminal to synchronize with the relay station on said at least one carrier which needs to be relayed by said relay station.

FIG.11 shows a structure block diagram of a mobile terminal in a wireless communication network based on multiple carriers. The mobile terminal is mobile terminal 23 as shown in FIG.2. Wherein, it includes: a second sending means 111, for by using at least one carrier which doesn't need to be relayed by a relay station to which the mobile terminal belongs, sending any of the following information of said at least one carrier which needs to be relayed by said relay station to a base station: resource assignment information; channel quality indicator.

Preferably, mobile terminal 23 further includes: a third receiving means 112, for receiving, from the base station by using at least one carrier which doesn't need to be relayed by the relay station to which the mobile terminal belongs, a resource assignment response of said at least one carrier which needs to be relayed by the relay station to which the mobile terminal belongs.

Preferably, mobile terminal 23 further includes: a third synchronization information receiving means 113, for receiving second synchronization information from said base station by using at least one carrier which doesn't need to be relayed by said relay station, said second synchronization information is used for the mobile terminal to synchronize with the base station on said at least one carrier which doesn't need to be relayed by said relay station.

Preferably, mobile terminal 23 further includes: a fourth synchronization information receiving means 114, for receiving third synchronization information from said relay station by using said at least one carrier which needs to be relayed by said relay station, the third synchronization information is used for the mobile terminal to synchronize with said relay station on said at least one carrier which needs to be relayed by said relay station.

The concrete embodiments of the present invention have been described above. It is understandable, that the present invention is not limited to the specific embodiments mentioned above. Those skilled in the art may perform various variation or modification in the protection scope of the claims.

## Claims

1. A method, in a wireless communication network based on multiple carriers, for implementing relay, comprising steps of:
a. according to channel conditions of said multiple carriers, determining at least one carrier which needs to be relayed for at least one relay station dominated by a base station respectively;
b. said at least one relay station performs relay based on said determined at least one carrier which needs to be relayed respectively.

2. A method according to claim 1, wherein the step a comprises performing following processes for every said relay station:
a1. obtaining signal quality information of each of said carriers;
a2. according to the obtained signal quality information of each of said carriers, determining at least one carrier which complies with a predefined condition as said at least one carrier which needs to be relayed by said relay station.

3. A method according to claim 2, wherein the signal quality information of each of said carriers indicates at least one of the followings:
- the quality of the channel between said base station and said relay station;
- the quality of the channel between said base station and at least one mobile terminal dominated by said relay station;
- the quality of the channel between said relay station and at least one mobile terminal dominated by said relay station.

4. A method according to claim 2 or claim 3, wherein said signal quality information comprises any one of the followings: received signal strength indicator, signal to noise ratio, signal to interference plus noise ratio.

5. A method according to claim 1, wherein after the step a, the method further comprising a step of executing the process below for each of said at least one relay station:
- by using at least one carrier which doesn't need to be relayed by said relay station, said base station performs a transmission of any of following information of said at least one carrier which needs to be relayed by said relay station, with said relay station and at least one mobile terminal dominated by said relay station:
resource assignment information;
channel quality indicator.

6. A method according to claim 5, wherein said resource assignment information comprises a resource assignment request and/or a resource assignment response.

7. A method according to claim 1, wherein after said step a, the method further comprises a step of executing the following process for each of said at least one relay station:
- said base station sends first synchronization information to said relay station by using said at least one carrier which needs to be relayed by said relay station, said first synchronization information is used for said relay station to synchronize with said base station on said at least one carrier which needs to be relayed by said relay station.

8. A method according to claim 1, wherein after the step a, the method further comprises a step of executing the following process for each of said at least one relay station:
- said base station sends second synchronization information to said relay station and at least one mobile terminals dominated by said relay station by using at least one carrier which doesn't need to be relayed by said relay station, said second synchronization information is used for said relay station and said at least one mobile terminal dominated by said relay station to synchronize with said base station on said at least one carrier which doesn't need to be relayed by said relay station.

9. A method according to claim 1, wherein said relay station sends third synchronization information to said at least one mobile terminal dominated by said relay station by using said at least one carrier which needs to be relayed by said relay station, the third synchronization information is used for said at least one mobile terminal to synchronize with said relay station on said at least one carrier which needs to be relayed by said relay station.

10. A method according to claim 2, wherein compared with at least one carrier which doesn't need to be relayed, said at least one carrier which needs to be relayed has higher frequency or worse wireless propagation characteristic.

11. A base station in a wireless communication network based on multiple carriers, comprising:
a first determining means, for determining at least one carrier which needs to be relayed for at least one relay station dominated by said base station respectively according to channel conditions of said multiple carriers.

12. A base station according to claim 11, wherein the first determining means comprises:
a signal quality information obtaining means, for obtaining signal quality information of each of said multiple carriers;
a second determining means, for determining at least one carrier which complies with a predefined condition as said at least one carrier which needs to be relayed by said relay station according to the obtained signal quality information of each of said multiple carriers.

13. A base station according to claim 11, wherein with respect to each said relay station, the signal quality information of one of said carriers indicates at least one of the followings:
- the quality of the channel between said base station and said relay station;
- the quality of the channel between said base station and at least one mobile terminal dominated by said relay station;
- the quality of the channel between said relay station and at least one mobile terminal dominated by said relay station.

14. A base station according to claim 12 or claim 13, wherein said signal quality information comprises any one of the followings: received signal strength indicator, signal to noise ratio, signal to interference plus noise ratio.

15. A base station according to claim 11, further comprising:
a first sending means, for executing the following process for each of said at least one relay station:
- by using at least one carrier which does not need to be relayed by said relay station, sending a resource assignment response of said at least one carrier which needs to be relayed by said relay station to said relay station and at least one mobile terminal dominated by said relay station.

16. A base station according to claim 11, further comprising:
a first receiving means, for executing the following process for each of said at least one relay station:
- by using at least one carrier which doesn't need to be relayed by said relay station, receiving, from at least one mobile terminal dominated by said relay station, a resource assignment request of said at least one carrier which needs to be relayed by said relay station.

17. A base station according claim 11, further comprising:
a first synchronization information sending means, for executing the following process for each of said at least one relay station:
- sending first synchronization information to said relay station by using said at least one carrier which needs to be relayed by said relay station, said first synchronization information is used for the relay station to synchronize with the base station on said at least one carrier which needs to be relayed by said relay station.

18. A base station according to claim 11, further comprising:
a second synchronization information sending means, for executing the following process for each of said at least one relay station:
- sending second synchronization information to said relay station and at least one mobile terminal dominated by said relay station by using at least one carrier which doesn't need to be relayed by said relay station, said second synchronization information is used for the relay station and at least one mobile terminal dominated by said relay station to synchronize with the base station on said at least one carrier which doesn't need to be relayed by said relay station.

19. A base station according to claim 11, wherein compared with at least one carrier which doesn't need to be relayed, said at least one carrier which needs to be relayed has higher frequency or worse wireless propagation characteristic.

20. A relay station in a wireless communication network based on multiple carriers, comprising:
a third determining means, for determining at least one carrier which needs to be relayed by said relay station according to channel conditions of said multiple carriers.

21. A relay station according to claim 20, wherein the third determining means comprises:
a channel estimating means, for performing channel estimation for said multiple carriers, so as to obtain signal quality information of said multiple carriers;
a fourth determining means, for determining said at least one carrier which needs to be relayed by said relay station, according to the obtained signal quality information.

22. A relay station according to claim 20, further comprising:
a second receiving means, for receiving, from the base station by using at least one carrier which doesn't need to be relayed by said relay station, resource assignment response of said at least one carrier which needs to be relayed by said relay station.

23. A relay station according to claim 20, further comprising:
a first synchronization information receiving means, for receiving first synchronization information from said base station by using said at least one carrier which needs to be relayed by said relay station, said first synchronization information is used for the relay station to synchronize with the base station on said at least one carrier which needs to be relayed by said relay station.

24. A relay station according to claim 20, further comprising:
a second synchronization information receiving means, for receiving second synchronization information from said base station by using the at least one carrier which doesn't need to be relayed by said relay station, said second synchronization information is used for the relay station to synchronize with the base station on said at least one carrier which doesn't need to be relayed by said relay station.

25. A relay station according to claim 20, further comprising:
a third synchronization information sending means, for sending third synchronization information to at least one mobile terminal dominated by said relay station by using said at least one carrier which needs to be relayed by said relay station, said third synchronization information is used for said at least one mobile terminal to synchronize with the relay station on said at least one carrier which needs to be relayed by said relay station.

26. A relay station according to claim 20, wherein compared with said at least one carrier which doesn't need to be relayed, said at least one carrier which needs to be relayed has higher frequency or worse wireless propagation characteristic.

27. A mobile terminal in a wireless communication network based on multiple carriers, comprising:
a second sending means, for by using at least one carrier which doesn't need to be relayed by a relay station to which the mobile terminal belongs, sending any of the following information of said at least carrier which needs to be relayed by said relay station to a base station:
resource assignment information;
channel quality indicator.

28. A mobile terminal according to claim 27, further comprising:
a third receiving means, for receiving, from the base station by using at least one carrier which doesn't need to be relayed by the relay station to which the mobile terminal belongs, a resource assignment response of said at least one carrier which needs to be relayed by the relay station to which the mobile terminal belongs.

29. A mobile terminal according to claim 27, further comprising:
a third synchronization information receiving means, for receiving second synchronization information from said base station by using at least one carrier which doesn't need to be relayed by said relay station, said second synchronization information is used for the mobile terminal to synchronize with the base station on said at least one carrier which doesn't need to be relayed by said relay station.

30. A mobile terminal according to claim 27, further comprising:
a fourth synchronization information receiving means, for receiving third synchronization information from said relay station by using said at least one carrier which needs to be relayed by said relay station, the third synchronization information is used for the mobile terminal to synchronize with said relay station on said at least one carrier which needs to be relayed by said relay station.

31. A mobile terminal according to claim 27, wherein compared with said at least one carrier which doesn't need to be relayed, said at least one carrier which needs to be relayed has higher frequency or worse wireless propagation characteristic.
